# EUROPEAN PATENT SPECIFICATION

(11) **EP 3 393 275 B1**
(45) Date of publication and mention of the grant of the patent: **19.08.2026**
(21) Application number: 16805375.9
(22) Date of filing: 30.11.2016
(51) Int. Cl.: A23L 33/10, A23L 33/16

(54) **IRON-FORTIFIED SAVOURY CONCENTRATE**
MIT EISEN ANGEREICHERTES SALZIGES KONZENTRAT
CONCENTRÉ SALÉ ENRICHI EN FER

(30) Priority: 21.12.2015 EP 15201660
(43) Date of publication of application: 31.10.2018
(73) Proprietor: Unilever IP Holdings B.V., 6708 WH Wageningen (NL)
(72) Inventor: DONSI, Francesco, 84084 Fisciano (SA) (IT); VELIKOV, Krassimir, Petkov, 3133 AT Vlaardingen (NL); VOUDOURIS, Panayiotis, 6523 GD Nijmegen (NL); JANSEN, Jeoffrey, Nikolai, 3133 AT Vlaardingen (NL)
(74) Representative: Unilever Patent Group
(86) International application number: PCT/EP2016/079187
(87) International publication number: WO 2017/108351

(56) References cited:
- WO-A1-2010/086192
- WO-A1-2015/028272
- WO-A1-2015/028273
- US-A- 4 107 346
- US-A- 4 994 283
- LYNCH S R ET AL: "Iron and ascorbic acid: proposed fortification levels and recommended iron compounds", THE JOURNAL OF NUTRITION, AMERICAN SOCIETY FOR NUTRITION, US, 1 January 2003 (2003-01-01), pages 2978S - 2984S, XP002532660, ISSN: 0022-3166

## Description

### TECHNICAL FIELD OF THE INVENTION

The present invention relates to iron-fortified savoury concentrates. These savoury concentrates can suitably be used in the preparation of iron-fortified soups, sauces and gravies. The savoury concentrates may also be used as such to fortify meals with iron by applying the savoury concentrate as a seasoning onto one or more meal components.

The iron-fortified savoury concentrate of the present invention contains at least 3 wt.% of taste imparting components selected from glutamate, sugars, pieces of plant material and combinations thereof; 0-30 wt.% of oil; 0-10 wt.% water; and 30-80 wt.% of salt particles, including at least 0.002 wt.% of iron-containing salt particles comprising:
- 0.03-30 mol% of iron cation selected from Fe²⁺, Fe³⁺ and combinations thereof;
- 10-49.97 mol% of non-iron cations selected from Na⁺, K⁺, Ca²⁺, NH₄⁺ and combinations thereof;
- 16-70.2 mol% of Cl⁻;
- 0-30 mol% of anions selected from SO₄²⁻, citrate, fumarate and combinations thereof.

The invention also relates to a method of preparing the aforementioned savoury concentrate and to a process of preparing a particulate salt composition containing the above mentioned iron-containing salt particles.

### BACKGROUND OF THE INVENTION

Most of the iron in the human body is present in the erythrocytes as haemoglobin, where its main function is to carry oxygen from the lungs to the tissues. Iron is also an important component of various enzyme systems, such as the cytochromes, which are involved in oxidative metabolism. It is stored in the liver as ferritin and as haemosiderin.

Iron deficiency is the most common and widespread nutritional disorder in the world, and is a public health problem in both industrialized and non-industrialised countries. Iron deficiency is the result of a long-term negative iron balance; in its more severe stages, iron deficiency causes anaemia. Anaemia is defined as a low blood haemoglobin concentration.

Haemoglobin cut-off values that indicate anaemia vary with physiological status (e.g. age, sex) and have been defined for various population groups by WHO.

Iron fortification of food is a methodology utilized worldwide to address iron deficiency.

Technically, iron is the most challenging micronutrient to add to foods, because the iron compounds that have the best bioavailability tend to be those that interact most strongly with food constituents to produce undesirable organoleptic changes. When selecting a suitable iron compound as a food fortificant, the overall objective is to find the one that has the greatest absorbability, yet at the same time does not cause unacceptable changes to the sensory properties (i.e. taste, colour, texture) of the food vehicle.

A wide variety of iron compounds are currently used as food fortificants. These can be broadly divided into three categories:
- water soluble;
- poorly water soluble but soluble in dilute acid;
- water insoluble and poorly soluble in dilute acid.

Being highly soluble in gastric juices, the water-soluble iron compounds have the highest relative bioavailability of all iron fortificants. However, water soluble iron compounds are also the most likely to have adverse effects on the organoleptic qualities of foods, in particular, on the colour and flavour. Unwanted colour changes typically include a green or bluish colouration in cereals, a greying of chocolate and cocoa, and darkening of salt to yellow or red/brown. During prolonged storage, the presence of fortificant iron in oil containing foods can cause rancidity and subsequent off flavours.

Ferrous sulfate is the most frequently used water-soluble iron fortificant. Other water soluble iron compounds that have been used for iron fortification are ferrous gluconate, ferrous lactate, ferrous bisglycinate, ferric ammonium citrate and sodium iron EDTA.

Ferrous sulfate and ferrous fumarate are available commercially in encapsulated form, and are currently used in dry infant formulas and in infant cereals, predominantly in industrialized countries. The main purpose of encapsulation is to separate the iron from the other food components, thereby mitigating sensory changes. When developing encapsulated iron fortificants, it is important to select a coating that provides an adequate balance between stability and bioavailability. Iron compounds are usually encapsulated with hydrogenated vegetable oils, but mono- and diglycerides and ethyl cellulose, have also been used.

US 4,107,346 describes a dietary salt composition for use as a replacement for salt in foods and as a dietary supplement which comprises a base formulation of the essential mineral element cations, sodium, potassium, calcium and magnesium in the form of physiologically acceptable compounds thereof in the proportions corresponding substantially to the proportions of these elements in the extra-cellular fluids of the human body, said proportions based on the cations comprising about 92-93.1% sodium, 2.4-3.4% potassium, 3.1-3.4% calcium and 1.2-1.4% magnesium, said base formulation acting as a carrier and having intimately associated therewith at least one of the trace elements known to be essential in the human diet, said trace elements being incorporated in proportions to supply at least about 20% of the recommended daily allowance of said trace elements as set by the National Academy of Sciences for each 10 gram portion of the salt composition

CN 101518325A describes a process of preparing an edible health-care salt by mixing table salt with ferrous sulfate in a weight ratio of (500-600):(1-20), heating to 810-870°C, stirring for 20-30 min, followed by cooling, milling and sieving.

WO 2010/086192 describes a dry savoury food concentrate comprising:
a) from 30 %wt. to 70 %wt. of NaCl;
b) from 0.05 %wt. to 2 %wt of an iron ion selected from the group consisting of Fe²⁺ and Fe³⁺ and mixtures thereof, which iron ion is derived from an added iron compound which is dissolvable in an aqueous solution,
c) from 0.35%wt. to 7.0%wt of an acid compound selected from the group consisting of citric acid, ascorbic acid, malic acid, tartaric acid, lactic acid and mixtures thereof,
all weight% based on the weight of the total dry savoury food concentrate, and wherein the ratio of acid ions to iron ions on molecular level is between 1 :1 and 10:1, and wherein the concentrate is a concentrate selected from the group of concentrates consisting of a bouillon concentrate, a soup concentrate, a sauce concentrate and a gravy concentrate.

LYNCH S R ET AL in THE JOURNAL OF NUTRITION 2003, pp 2978S-2984S discusses the optimal amounts of iron and vitamin C for fortification of infant foods.

### SUMMARY OF THE INVENTION

The inventors have developed a new vehicle for iron-fortification of meals and meal components in the form of a savoury concentrate that contains substantial levels of water-soluble iron salt. More particularly, the present invention relates to a savoury concentrate containing:
- 30-80 wt.% of salt particles, including at least 0.002 wt.% of iron-containing salt particles comprising:
   ∘ 0.03-30 mol% of iron cation selected from Fe²⁺, Fe³⁺ and combinations thereof;
   ∘ 10-49.97 mol% of non-iron cations selected from Na⁺, K⁺, Ca²⁺, NH₄⁺ and combinations thereof;
   ∘ 16-70.2 mol% of Cl⁻;
   ∘ 0-30 mol% of anions selected from SO₄²⁻, citrate, fumarate and combinations thereof.
- at least 3 wt.% of taste imparting components selected from glutamate, sugars, pieces of plant material and combinations thereof;
- 0-30 wt.% of oil;
- 0-10 wt.% water.

The savoury concentrate of the present invention can suitably be used in the preparation of e.g. sauces, soups, gravies etc., or it can be added to meal components as a seasoning. Sauces and seasonings have several advantages as vehicles for iron fortification. They are traditionally part of the daily diet in most countries, widely consumed, reach vulnerable populations, and can be added to all kinds of foods.

The savoury concentrate of the present invention offers the advantage that the iron contained therein is highly bioavailable. Furthermore, the iron-containing salt particles contained in the savoury concentrate do not give rise to unacceptable colour changes.

The invention also provides a process of preparing a particulate salt composition as defined by claim 9, comprising
the steps of:
- preparing an aqueous salt solution by combining water with at least slightly water soluble iron salt and water soluble non-iron salt, said water soluble non-iron salt being a salt of cation selected from sodium, potassium, calcium, ammonium and combinations thereof; and
- precipitating a salt precipitate from the aqueous salt solution, said precipitate containing cationic iron and cation selected from sodium, potassium, calcium, ammonium and combinations thereof.

### DETAILED DESCRIPTION OF THE INVENTION

A first aspect of the invention relates to a savoury concentrate containing:
- 30-80 wt.% of salt particles, including at least 0.002 wt.% of iron-containing salt particles comprising:
   ∘ 0.03-10 mol% of iron cation selected from Fe²⁺, Fe³⁺ and combinations thereof;
   ∘ 10-49.97 mol% of non-iron cations selected from Na⁺, K⁺, Ca²⁺, NH₄⁺ and combinations thereof;
   ∘ 16-70.2 mol% of Cl⁻;
   ∘ 0-30 mol% of anions selected from SO₄²⁻, citrate, fumarate and combinations thereof.
- at least 3 wt.% of taste imparting components selected from glutamate, sugars, pieces of plant material and combinations thereof;
- 0-30 wt.% of oil;
- 0-10 wt.% water.

The term "salt particles" as used herein, unless indicated otherwise, refers to particles that largely (>50 wt.%) consist of one or more edible salts.

The iron-containing salt particles of the present invention contain a combination of different salts. The composition of the iron-containing salt particles, unless indicated otherwise, is defined herein by referring to the molar concentration in which anions and cations are present in these salt particles. It can be calculated that the composition iron-containing salt particles that have been prepared from a salt mixture consisting of NaCl and FeSO₄ in a molar ratio of 4:1 has the following composition:

| | **Mol%** | **Wt.%** |
|---|---|---|
| Na⁺ | 40.0 | 23,8 |
| Fe²⁺ | 10.0 | 14.5 |
| Cl⁻ | 40.0 | 36.8 |
| SO₄²- | 10.0 | 24.9 |

The term "oil" as used herein refers to fatty acid glycerol ester selected from triglycerides, diglycerides, monoglycerides, phosphoglycerides and combinations thereof.

The water content of the savoury concentrate and of salt particles, including the iron-containing salt particles, unless indicated otherwise, is determined by oven drying, e.g. using an Ecocell^{™} drying oven without the continuous air function at 90 °C (3 days).

According to a particularly preferred embodiment the savoury concentrate of the present invention is a shaped article, notably a shaped solid article. Examples of shaped solid articles include savoury concentrates in the form of cubes, tablets or granules. The shaped article typically has a piece weight in the range of 2 to 30 grams, more preferably in the range of 4 to 15 grams.

The iron content of the savoury concentrate preferably is at least 1.5 × 10⁻³ mmol/g. More preferably, the iron content of the concentrate is in the range of 0.005 - 0.15 mmol/g and most preferably 0.01-0.05 mmol/g.

One unit of the savoury concentrate typically contains at least 0.01 mmol, more preferably 0.02-0.2 mmol and most preferably 0.025-0.1 mmol of iron. Here the term "unit" refers to the amount of savoury concentrate that is provided in a single packaging unit. In case multiple packaging units are packaged together (e.g. a plurality of wrapped bouillon bocks in a single box), the term "unit" refers to the amount of concentrate contained in the smallest packaging unit.

The savoury concentrate of the present invention preferably contains 35 to 75 wt.%, more preferably 40 to 70 wt.% of salt particles.

The salt particles in the savoury concentrate typically have a mass weighted average diameter in the range of 0.1-5,000 µm, more preferably 3-1,000 µm and most preferably of 10-300 µm.

The salt particles in the savoury concentrate preferably contain at least 70 wt.%, more preferably at least 85 wt.% and most preferably at least 95 wt.% of edible salt.

The salt particles in the savoury concentrate may exclusively consist of iron-containing salt particles. Alternatively, the salt particles may contain a combination of the iron-containing salt particles and other salt particles. Preferably, in this latter embodiment, the other salt particles are inorganic salt particles that contain at least 90 wt.% of NaCl, KCI or a combination of these two chloride salts. The combination of iron-containing salt particles and the latter inorganic salt particles preferably constitutes at least 80 wt.%, more preferably at least 90 wt.% and most preferably at least 95 wt.% of the salt particles in the savoury concentrate.

The iron-containing salt particles typically represent 0.1-100 wt.% of the salt particles in the savoury concentrate. More preferably, the iron-containing salt particles represent 0.22-50 wt.%, most preferably 2-15 wt.% of the salt particles in the savoury concentrate.

The iron-containing salt particles typically are preferably contained in the savoury concentrate in a concentration in the range of 0.005-70 wt.%, more preferably in the range of 0.01-60 wt.% and most preferably in the range of 0.03-56 wt.%.

The iron-containing salt particles preferably contain 0.05-28 mol%, more preferably 0.3-25 mol%, even more preferably 1-22 mol% and most preferably 5-20 mol% of iron cation selected from Fe²⁺, Fe³⁺ and combinations thereof.

The iron-containing salt particles preferably contain Fe²⁺ in a concentration of 0.05-28 mol%, more preferably of 0.3-25 mol%, even more preferably 1-22 mol% and most preferably of 5-20 mol%.

Besides cationic iron, the iron-containing salt particles may suitably contain cations of one or more other nutritionally essential metals. Accordingly, in a preferred embodiment the iron-containing salt particles contain up to 25 mol%, more preferably 0.001-20 mol%, even more preferably 0.01-10 mol% of essential metal cation selected from Mg²⁺, Mn²⁺, Cu²⁺, Zn²⁺and combinations thereof.

In an alternative embodiment, the iron containing particles contain essentially no cations other than the iron cations and the non-iron cations selected from Na⁺, K⁺, Ca²⁺, NH₄⁺ and combinations thereof.

The iron-containing salt particles are preferably prepared by combining an iron salt with a water-soluble salt of sodium and/or potassium. Accordingly, in a preferred embodiment, the iron-containing salt particles contain at least 15 mol% of Na⁺, K⁺ and combinations thereof. More preferably, the iron-containing salt particles contain at least 25 mol%, most preferably at least 35 mol% of Na⁺, K⁺ and combinations thereof.

The iron-containing salt particles typically contain at least 15 mol%, more preferably at least 25 mol% and most preferably at least 30 mol% of Cl⁻. The chloride anions may be introduced into the iron-containing salt particles by combining, for instance, NaCl and/or KCI with iron salt. Chloride anions may additionally be introduced by an iron salt such as FeCl₂ and/or FeCl₃.

According to a particularly preferred embodiment the iron-containing salt particles contain at least 0.01 mol%, more preferably at least 0.1 mol% and most preferably 1-25 mol% of anions selected from SO₄²⁻, citrate, fumarate and combinations thereof.

The iron-containing salt particles preferably contain at least 0.01 mol%, more preferably at least 0.1 mol% and most preferably 1-25 mol% of SO₄²⁻.

According to a particularly preferred embodiment, the combination of Fe²⁺, Fe³⁺, Na⁺, K⁺ constitutes at least 50 mol%, more preferably at least 75 mol% and most preferably at least 90 mol% of the cations contained in the iron-containing salt particles.

According to another preferred embodiment, the combination of Cl⁻ and SO₄²⁻ constitutes at least 50 mol%, more preferably at least 75 mol% and most preferably at least 90 mol% of the anions contained in the iron-containing salt particles.

Typically, the combination of Fe²⁺, Fe³⁺, Na⁺, K⁺, Cl⁻ and SO₄²⁻ constitutes at least 50 mol%, more preferably at least 75 mol% and most preferably at least 90 mol% of the iron-containing salt particles.

The iron-containing salt particles in the savoury concentrate preferably can be obtained by precipitation from an aqueous solution, more preferably by spray drying an aqueous solution. Suitable processes for precipitating iron-containing salt particle from aqueous solutions are described herein.

The iron salt employed in the preparation of the iron-containing salt particles preferably is water-soluble or poorly water-soluble iron salt. Examples of water-soluble iron salts that may be employed include iron sulfates, iron chlorides and iron fumarates.

The iron-containing salt particles contained in the savoury concentrate typically have a mass weighted average diameter in the range of 0.1-5,000 µm, more preferably 3-1,000 µm and most preferably of 10-300 µm.

Taste imparting components selected from glutamate, sugars, pieces of plant material and combinations thereof preferably are contained in the savoury concentrate in a concentration of at least 5 wt.%, more preferably in a concentration of at least 10 wt.% and most preferably in a concentration of 12-50 wt.%.

The savoury concentrate may suitably contain pieces of plant materials, e.g. spices, herbs or parts thereof. Preferably, the savoury concentrate contains 0.1-20 wt.%, more preferably 0.5-10 and most preferably 1-5 wt.% of pieces of plant material.

According to a particularly preferred embodiment, the savoury concentrate contains at least 0.5 wt.% glutamate. More preferably, the concentrate contains 1-35 wt.% glutamate, most preferably 5-30 wt.% glutamate.

The savoury concentrate of the present invention preferably contains at least 1 wt.% oil. More preferably, the savoury concentrate contains 3-25 wt.% oil, most preferably 5-20 wt.% oil. The oil contained in the savoury concentrate may be liquid, semi solid or solid, but preferably is liquid. Preferably, the oil contained in food concentrate has a solid fat content at 20°C (N₂₀) of not more than 10%. Even more preferably, the oil has a N₂₀ of not more than 5% and most preferably the oil has a N₂₀ of 0%. The solid fat content of the oil can suitably be determined using the method described in *Animal and vegetable fats and oils -- Determination of solid fat content by pulsed NMR -- Part 1: Direct method -* ISO 8292-1:2008.

The water content of the savoury concentrate preferably does not exceed 8 wt.%, even more preferably the water content does not exceed 6 wt.%.

The water activity of the savoury concentrate is preferably in the range of 0.1 to 0.6. More preferably, the water activity is in the range of 0.15 to 0.4, most preferably in the range of 0.1 to 0.2.

The savoury concentrate of the present invention typically contains 0-20 wt.% thickening agent. More preferably, the savoury concentrate contains 0.5-12 wt.% thickening agent. Examples of thickening agents that may be employed include starch, starch derivatives, gums (e.g. locust bean gum, guar gum) and combinations thereof.

The savoury concentrate as defined herein may be prepared by a method comprising combining 30-80 parts by weight of salt particles with 3-70 parts by weight of the taste imparting components selected from glutamate, sugars, pieces of plant material and combinations thereof, wherein the salt particles contain at least 0.002 wt.% of iron-containing salt particles as defined herein before.

The iron-containing salt particles employed in the preparation method are the iron-containing salt particles as defined herein before.

The preparation method preferably includes the addition of oil. Other components that may suitably be added during the preparation process include thickening agents, colouring and combinations thereof.

In the preparation method the savoury concentrate is preferably shaped allowing the concentrate to solidify in a mould or by pressing the concentrate into a predefined shape (e.g. by extrusion or tabletting).

The invention also relates to the use of the savoury concentrate of the present invention in preparation of a sauce, a soup or a gravy and to the use of the savoury concentrate as a seasoning. In the preparation of a sauce, a soup or a gravy, the savoury concentrate is normally combined with a hot aqueous liquid having a temperature in excess of 60°C.

Yet another aspect of the invention relates to a process of preparing a particulate salt composition, as defined in claim 9, said process comprising the steps of:
- preparing an aqueous salt solution by combining water with at least slightly water soluble iron salt and water soluble non-iron salt, said water soluble non-iron salt being a salt of a cation selected from sodium, potassium, calcium, ammonium and combinations thereof, the at least slightly water soluble iron salt and the water soluble non-iron salt being combined in a molar ratio that is within the range of 1:1,000 to 1.2:1; and
- precipitating a salt precipitate from the aqueous salt solution, said precipitate containing cationic iron and cation selected from sodium, potassium, calcium, ammonium and combinations thereof in a molar ratio of 1:1000 to 1.2:1.

The at least slightly water soluble iron salt is preferably selected from FeSO₄, Fe₂(SO₄)₃, FeCl₃, FeCl₂, iron citrate, iron fumarate, hydrates of these salts and combinations of these salts and hydrates. More preferably, the at least slightly water soluble iron salt is a water-soluble iron salt selected from FeSO₄, Fe₂(SO₄)₃ hydrates of these salts and combinations of these salts and hydrates. Most preferably, the at least slightly water soluble salt is selected from FeSO₄, a hydrate of this salt and combinations of this salt and hydrates

The water soluble non-iron salt that is employed in the present process is preferably selected from NaCl, KCI, CaCl₂ and combinations thereof. More preferably, the water soluble non-iron salt is selected from NaCl, KCI and combinations thereof.

Besides the at least slightly water-soluble iron salt and the water soluble non-iron salt, the aqueous solution may suitably contain dissolved salts of nutritionally essential metals selected from magnesium, manganese, copper, zinc and combinations thereof. Thus, the present process can be used to prepare a precipitate that contains iron in combination with other essential metals.

The at least slightly water soluble iron salt and the water soluble non-iron salt are preferably combined to form the aqueous salt solution in a molar ratio that is within the range of 1:1 to 1:1000, more preferably in a molar ration that is within the range of 1:2 to 1:500, and most preferably in a molar ratio that is within the range of 1:4 to 1:200.

In the present process the salt precipitate is preferably precipitated from the aqueous salt solution by reducing the water content. The water content of the aqueous salt solution may suitably be reduced by drying and/or by adding a non-aqueous solvent.

According to a particularly preferred embodiment of the present process the salt precipitate is precipitated from the aqueous salt solution means of spray drying, drum drying, freeze drying or a combination of these drying techniques. Most preferably, the salt precipitate is prepared by spray drying the aqueous salt solution.

The salt precipitate is typically dried to a water content of less than 10 wt.%. More preferably, the salt precipitate is dried to a water of less than 8 wt.%, most preferably of less than 6 wt.%.

Expressed differently, the salt precipitate is preferably dried to a water activity in the range of 0.1 to 0.6, more preferably in the range of 0.15 to 0.4, and most preferably in the range of 0.1 to 0.2.

The invention is further illustrated by the following non-limiting examples.

### EXAMPLES

### Example 1

Iron-containing salt particles were prepared by spray drying aqueous solutions of NaCl and FeSO₄×7H₂O.

The aqueous salt solutions were prepared by mixing sodium chloride powder and FeSO₄×7H₂O powder corresponding to different weight ratios of NaCl and Fe (i.e. m_{NaCl}/ m_{Fe}) of 900, 100, 10 and 1. The amount of milliQ water used for the preparation of the solutions was chosen to achieve a salt concentration c_{NaCl} = 8.1 ± 0.2 wt % for all samples. After addition of the water to the powder mixture the samples were mixed for 30 min using a magnetic stirrer in order to achieve full dissolution. The compositions of the solutions are shown in Table 1.

**Table 1**

| **Solution** | **NaCl (g)** | **FeSO₄×7H₂O (g)** | **Water (g)** | **m_{Fe} (g)** | **m_{NaCl}/ m_{Fe}** |
|---|---|---|---|---|---|
| A | 16.51 | 80.01 | 200.0 | 16.12 | 1.02 |
| B | 163.22 | 81.02 | 2000.0 | 16.32 | 10.0 |
| C | 163.42 | 8.11 | 2000.0 | 1.63 | 100 |
| D | 162.19 | 0.894 | 2000.0 | 0.18 | 900 |

The salt solutions so prepared were spray dried using a Buchi B-290 mini spray drier, using a 1.5 mm two-fluid nozzle having an atomizing pressure of 2 bars with an inlet temperature of 165 °C. The inlet (controlled) and outlet (measured) air temperatures were 165 °C and 90-81 °C, respectively. The weight ratios NaCl to Fe (m_{NaCl}/ m_{Fe}) in the spray dried salts (A - D) are shown in Table 1.

### Example 2

Bouillon cubes fortified with iron (2.40 ± 0.15 mg Fe per 4g cube = 15% RDA) were prepared using the spray dried iron-containing powders of Example 1 or using a mixture of NaCl and anhydrous FeSO₄ (Ref 2). A bouillon cube that was not fortified with iron was used as a control (Ref 1).

The bouillon cubes were prepared on the basis of the recipes shown in Table 2.

**Table 2**

| **Ingredients (wt.%)** | **Ref 1** | **Ref 2** | **1** | **2** | **3** | **4** |
|---|---|---|---|---|---|---|
| Anhydrous FeSO₄ | 0 | 0.162 | 0 | 0 | 0 | 0 |
| Salt A | 0 | 0 | 0.121 | 0 | 0 | 0 |
| Salt B | 0 | 0 | 0 | 0.700 | 0 | 0 |
| Salt C | 0 | 0 | 0 | 0 | 6.350 | 0 |
| Salt D | 0 | 0 | 0 | 0 | 0 | 55.54 |
| NaCl | 55.53 | 55.37 | 55.41 | 54.83 | 49.19 | 0 |
| Mono-Sodium-Glutamate | 14.95 | 14.95 | 14.95 | 14.95 | 14.95 | 14.95 |
| Sugar | 16.02 | 16.02 | 16.02 | 16.02 | 16.02 | 16.02 |
| Corn starch | 6.03 | 6.03 | 6.03 | 6.03 | 6.03 | 6.03 |
| Fat (palm stearin) | 7.47 | 7.47 | 7.47 | 7.47 | 7.47 | 7.46 |

The bouillon cubes were prepared as follows:
- All ingredients, except for the palm stearate and the anhydrous iron sulfate (for Ref 2) were weighed together in a plastic jar and mixed
- The palm stearin was molten and added to the mixture, after which the mixture was mixed
- The anhydrous iron salt was added to the Ref 2 mixture followed by mixing
- 2.4 grams of each of the mixtures was transferred into a stainless steel mould and pressed into the form of a cube at a pressure of 5 kN (using an Instron 5567).

The bouillon cubes so obtained were subjected to an accelerated stability test. Two identical cubes were placed in a 200 ml glass jar. 1 gram of water was added into the jar in such a way that the cube does not come into direct contact with the water. The jars were closed with a lid and placed in an oven at 40°C. After three weeks the bouillon cubes were visually inspected by an expert panel.

The panel found that the Ref 2 cube had developed several dark spots during the three week storage period. The appearance of the Ref 1 cube, however, had not substantially changed during the storage period. The appearance of bouillon cubes 1-4 had changed during the storage period in that these cubes had developed a slightly darker, beige colour. However, unlike bouillon cube Ref 2, the appearance of bouillon cubes 1-4 was still rated as acceptable.

In addition, during the accelerated stability test the colour homogeneity of the samples was determined. Images were obtained at time intervals t=0 min and 17 hours after the samples were subjected to the test. The images obtained, were analysed to quantify the changes in color homogeneity during the test. A DigiEye Imaging system from VeriVide Ltd. was used to obtain photographic images with a D65 light source operating in diffusion illumination mode under controlled and calibrated conditions. The images as obtained from the DigiEye were analysed with the software ImageJ (with reference to software link-http://rsb.info.nih.gov/ij/ and ImageJ plugins) in order to obtain the colour homogeneity of the samples. The analysis started with cropping the area representing only the surface of the bouillon cube (i.e. the rectangle areas of the upper surface of the cube was selected by the removal of the outer parts of the image). This was done by using the "Crop" function of the software ImageJ.

Next, by using the function "Histogram" of the software on the colour image the gray value intensity distribution of the selected area was obtained. The resulting histogram is a list containing the number of pixels per channel; the X-axis represents the gray values (expressed as 0 to 256 channels) and the Y-axis shows the number of pixels found for each channel (i.e. gray value). The maximum of the pixel histogram is determined and this value is divided by two to obtain the number of pixels at half the maximum. The full width at half maximum (FWHM) was determined by counting the number of channels that have a pixel value higher or equal to half the maximum. Any channel containing a zero value that is adjacent to a channel with a count higher than half the maximum is included in the count. The obtained channel count is divided by 256 to yield the FWHM, a number between 0 and 1 for each individual image.

To quantify the changes in the homogeneity of the cubes, the images obtained at the beginning (t=0) and at the end (t=17h) of the accelerated stability tests were used. From the obtained images, to quantify the change in colour homogeneity, dFWHM, the FWHM of the histograms at the end of the accelerated stability experiment (FWHM _{t =17h}) was substracted from the FWHM at the beginning of the experiment (FWHM _{t =0}) (i.e. dFWHM = FWHM _{t =0} - FWHM _{t =17h}). In order to calculate the relative changes with respect to the initial homogeneity conditions of the cubes, stability parameter (SP) was calculated, using the following equation: SP = dFWHM / FWHM _{t =0} × 100 %. The results are shown in Table 3.

**Table 3**

| | **FWHM _{t =0}** | **FWHM _{t =17h}** | **dFWHM** | **SP** |
|---|---|---|---|---|
| Reference 1 | 0.03906 | 0.02734 | 0.01172 | 30% |
| Reference 2 | 0.03125 | 0.07031 | -0.03906 | -125% |
| Sample 1 | 0.04297 | 0.03125 | 0.01172 | 27% |
| Sample 2 | 0.05469 | 0.04297 | 0.01172 | 21% |
| Sample 3 | 0.07031 | 0.05859 | 0.01172 | 16% |
| Sample 4 | 0.07031 | 0.0625 | 0.00781 | 11% |

These results show that the Ref 2 cube had developed large colour inhomogeneity (dFWHM) during the 17 hours storage period. The developed inhomogeneity is illustrated by the negative sign of dFWHM value, leading to large change in the stability parameter (SP). On the other hand the Ref 1 cube and bouillon cubes 1-4 showed small changes in colour homogeneity during the storage period and small change in the stability parameter. For these cases the positive sign of the dFWHM indicates that during storage the color of the samples becomes more homogeneous. Unlike bouillon cube Ref 2, the colour homogeneity of bouillon cubes 1-4 was rated as acceptable.

## Claims

1. A savoury concentrate containing:
• 30-80 wt.% of salt particles, including at least 0.002 wt.% of iron-containing salt particles comprising:
∘ 0.03-30 mol% of iron cation selected from Fe²⁺, Fe³⁺ and combinations thereof;
∘ 10-49.97 mol% of non-iron cations selected from Na⁺, K⁺, Ca²⁺, NH₄⁺ and combinations thereof;
∘ 16-70.2 mol% of Cl⁻;
∘ 0-30 mol% of anions selected from SO₄²⁻, citrate, fumarate and combinations thereof;
• at least 3 wt.% of taste imparting components selected from glutamate, sugars, pieces of plant material and combinations thereof;
• 0-30 wt.% of oil;
• 0-10 wt. % water.

2. Savoury concentrate according to claim 1, wherein the iron-containing salt particles contain at least 15 mol% of Na⁺, K⁺ and combinations thereof.

3. Savoury concentrate according to claim 1 or 2, wherein the iron-containing salt particles contain at least 0.01 mol% of anions selected from SO₄²⁻, citrate, fumarate and combinations thereof.

4. Savoury concentrate according to any one of the preceding claims, wherein the iron-containing salt particles contain at least 0.051 mol%, preferably at least 0.3 mol% of iron cation selected from Fe²⁺, Fe³⁺ and combinations thereof.

5. Savoury concentrate according to claim 4, wherein the iron-containing salt particles contain at least 0.05 mol%, preferably at least 0.3 mol% of Fe²⁺.

6. Savoury concentrate according to any one of the preceding claims, wherein the iron-containing salt particles have a mass weighted average diameter in the range of 0.1-5,000 µm, preferably 3-1,000 µm.

7. Savoury concentrate according to any one of the preceding claims, wherein the concentrate contains at least 3 wt.% oil.

8. Savoury concentrate according to any one of the preceding claims, wherein the concentrate contains at least 0.5 wt.% of glutamate.

9. A process of preparing a particulate salt composition comprising:
∘ 0.03-30 mol% of iron cation selected from Fe²⁺, Fe³⁺ and combinations thereof;
∘ 10-49.97 mol% of non-iron cations selected from Na⁺, K⁺, Ca²⁺, NH₄⁺ and combinations thereof;
∘ 16-70.2 mol% of Cl⁻;
∘ 0-30 mol% of anions selected from SO₄²⁻, citrate, fumarate and combinations thereof;
said process comprising the steps of:
• preparing an aqueous salt solution by combining water with at least slightly water soluble iron salt and water soluble non-iron salt, said water soluble non-iron salt being a salt of a cation selected from sodium, potassium, calcium, ammonium and combinations thereof, the at least slightly water soluble iron salt and the water soluble non-iron salt being combined in a molar ratio that is within the range of 1:1,000 to 1.2:1; and
• precipitating a salt precipitate from the aqueous salt solution, said precipitate containing cationic iron and cation selected from sodium, potassium, calcium, ammonium and combinations thereof in a molar ratio of 1:1000 to 1.2:1.

10. Process according to claim 9, wherein the at least slightly water soluble iron salt is selected from FeSO₄, Fe₂(SO₄)₃, FeCl₃, FeCl₂, iron citrate, iron fumarate, hydrates of these salts and combinations of these salts and hydrates.

11. Process according to claim 9 or 10, wherein the water soluble non-iron salt is selected from NaCl, KCl, CaCl₂, MgCl₂ and combinations thereof.

12. Process according to any one of claims 9-11, wherein the salt precipitate is precipitated from the aqueous salt solution means of spray drying, drum drying, freeze drying or a combination of these drying techniques.

13. Process according to claim 12, wherein the salt precipitate is dried to a water content of less than 10 wt.%.

## Patentansprüche

1. Würzkonzentrat, enthaltend:
• 30-80- Gew.-% Salzpartikel, einschließlich mindestens 0,002 Gew.-% eisenhaltiger Salzpartikel, umfassend:
∘ 0,03-30 Mol-% Eisenkationen, ausgewählt unter Fe²⁺, Fe³⁺ und Kombinationen davon;
∘ 10-49,97 Mol-% Nicht-Eisen-Kationen, ausgewählt unter Na⁺, K⁺, Ca²⁺, NH₄⁺ und Kombinationen davon;
o 16-70,2 Mol-% Cl⁻;
o 0-30 Mol-% Anionen, ausgewählt unter SO₄²⁻, Citrat, Fumarat und Kombinationen davon;
• mindestens 3 Gew.-% geschmacksverleihende Komponenten, ausgewählt unter Glutamat, Zuckern, Stückchen pflanzlichen Materials und Kombinationen davon;
• 0-30 Gew.-% Öl;
• 0-10 Gew.-% Wasser.

2. Würzkonzentrat nach Anspruch 1, wobei die eisenhaltigen Salzpartikel mindestens 15 Mol-% Na⁺, K⁺ und Kombinationen davon enthalten.

3. Würzkonzentrat nach Anspruch 1 oder 2, wobei die eisenhaltigen Salzpartikel mindestens 0,01 Mol-% Anionen enthalten, die unter SO₄²⁻, Citrat, Fumarat und Kombinationen davon ausgewählt sind.

4. Würzkonzentrat nach irgendeinem der vorhergehenden Ansprüche, wobei die eisenhaltigen Salzpartikel mindestens 0,051 Mol-%, vorzugsweise mindestens 0,3 Mol-% Eisenkationen enthalten, ausgewählt unter Fe²⁺, Fe³⁺ und Kombinationen davon.

5. Würzkonzentrat nach Anspruch 4, wobei die eisenhaltigen Salzpartikel mindestens 0,05 Mol-%, vorzugsweise mindestens 0,3 Mol-% Fe²⁺ enthalten.

6. Würzkonzentrat nach irgendeinem der vorhergehenden Ansprüche, wobei die eisenhaltigen Salzpartikel einen massengewichteten mittleren Durchmesser im Bereich von 0,1 bis 5.000 µm, vorzugsweise von 3 bis 1.000 µm, aufweisen.

7. Würzkonzentrat nach irgendeinem der vorhergehenden Ansprüche, wobei das Konzentrat mindestens 3 Gew.-% Öl enthält.

8. Würzkonzentrat nach irgendeinem der vorhergehenden Ansprüche, wobei das Konzentrat mindestens 0,5 Gew.-% Glutamat enthält.

9. Verfahren zur Herstellung einer partikelförmigen Salzzusammensetzung, umfassend:
∘ 0,03-30 Mol-% Eisenkationen, ausgewählt unter Fe²⁺, Fe³⁺ und Kombinationen davon;
∘ 10-49,97 Mol-% Nicht-Eisen-Kationen, ausgewählt unter Na⁺, K⁺, Ca²⁺, NH₄⁺ und Kombinationen davon;
∘ 16-70,2 Mol-% Cl⁻;
∘ 0-30 Mol-% Anionen, ausgewählt unter SO₄²⁻, Citrat, Fumarat und Kombinationen davon;
wobei das Verfahren die folgenden Schritte umfasst:
Herstellen einer wässrigen Salzlösung durch Zusammenbringen von Wasser mit einem zumindest leicht wasserlöslichem Eisensalz und einem wasserlöslichem Nicht-Eisen-Salz, wobei das wasserlösliche Nicht-Eisen-Salz ein Salz eines Kations ist, ausgewählt unter Natrium, Kalium, Calcium, Ammonium und Kombinationen davon, wobei das zumindest leicht wasserlösliche Eisensalz und das wasserlösliche Nicht-Eisen-Salz in einem Molverhältnis im Bereich von 1:1.000 bis 1,2:1 miteinander kombiniert werden; und
Ausfällen eines Salzpräzipitats aus der wässrigen Salzlösung, wobei das Präzipitat kationisches Eisen und ein Kation, das aus Natrium, Kalium, Calcium, Ammonium und Kombinationen davon ausgewählt ist, in einem Molverhältnis von 1:1000 bis 1,2:1 enthält.

10. Verfahren nach Anspruch 9, wobei das zumindest leicht wasserlösliche Eisensalz unter FeSO₄, Fe₂(SO₄)₃, FeCl₃, FeCl₂, Eisencitrat, Eisenfumarat, Hydraten dieser Salze und Kombinationen dieser Salze und Hydrate ausgewählt ist.

11. Verfahren nach den Ansprüchen 9 oder 10, wobei das wasserlösliche Nicht-Eisensalz unter NaCl, KCl, CaCl₂, MgCl₂ und Kombinationen davon ausgewählt ist.

12. Verfahren nach irgendeinem der Ansprüche 9 bis 11, wobei das Salzpräzipitat aus der wässrigen Salzlösung mittels Sprühtrocknung, Trommeltrocknung, Gefriertrocknung oder einer Kombination dieser Trocknungstechniken ausgefällt wird.

13. Verfahren nach Anspruch 12, wobei das Salzpräzipitat bis auf einen Wassergehalt von weniger als 10 Gew.-% getrocknet wird.

## Revendications

1. Concentré savoureux contenant:
• 30 à 80 % en poids de particules de sels, incluant au moins 0,002 % en poids de particules de sels contenant du fer comprenant:
o 0,03 à 30 mol % de cations ferreux choisis parmi Fe²⁺, Fe³⁺ et leurs combinaisons;
o 10 à 49,97 mol % de cations non ferreux choisis parmi Na⁺, K⁺, Ca²⁺, NH₄⁺ et leurs combinaisons;
o 16 à 70,2 mol % de Cl⁻;
o 0 à 30 mol % d'anions choisis parmi SO₄²⁻, citrate, fumarate et leurs combinaisons;
• au moins 3 % en poids de composants conférant du goût choisis parmi le glutamate, les sucres, les fragments de matière végétale et leurs combinaisons;
• 0 à 30 % en poids d'huile;
• 0 à 10 % en poids d'eau.

2. Concentré savoureux selon la revendication 1, dans lequel les particules de sels contenant du fer contiennent au moins 15 mol % de Na⁺, K⁺ et leurs combinaisons.

3. Concentré savoureux selon la revendication 1 ou 2, dans lequel les particules de sels contenant du fer contiennent au moins 0,01 mol % d'anions choisis parmi SO₄²⁻, citrate, fumarate et leurs combinaisons.

4. Concentré savoureux selon l'une quelconque des revendications précédentes, dans lequel les particules de sels contenant du fer contiennent au moins 0,051 mol %, de préférence au moins 0,3 mol % de cations ferreux choisis parmi Fe²⁺, Fe³⁺ et leurs combinaisons.

5. Concentré savoureux selon la revendication 4, dans lequel les particules de sels contenant du fer contiennent au moins 0,05 mol %, de préférence au moins 0,3 mol % de Fe²⁺.

6. Concentré savoureux selon l'une quelconque des revendications précédentes, dans lequel les particules de sels contenant du fer ont un diamètre moyen pondéré en masse dans la plage de 0,1 à 5 000 µm, de préférence de 3 à 1 000 µm.

7. Concentré savoureux selon l'une quelconque des revendications précédentes, dans lequel le concentré contient au moins 3 % en poids d'huile.

8. Concentré savoureux selon l'une quelconque des revendications précédentes, où le concentré contient au moins 0,5 % en poids de glutamate.

9. Procédé de préparation d'une composition de sels particulaire comprenant:
o 0,03 à 30 mol % de cations ferreux choisis parmi Fe²⁺, Fe³⁺ et leurs combinaisons;
o 10 à 49,97 mol % de cations non ferreux choisis parmi Na⁺, K⁺, Ca²⁺, NH₄⁺ et leurs combinaisons;
o 16 à 70,2 mol % de Cl⁻;
o 0 à 30 mol % d'anions choisis parmi SO₄²⁻, citrate, fumarate et leurs combinaisons;
ledit procédé comprend les étapes de:
• préparation d'une solution aqueuse de sels en combinant de l'eau avec un sel de fer au moins légèrement soluble dans l'eau et un sel non ferreux soluble dans l'eau, ledit sel non ferreux soluble dans l'eau étant un sel d'un cation choisi parmi le sodium, le potassium, le calcium, l'ammonium et leurs combinaisons, le sel de fer au moins légèrement soluble dans l'eau et le sel non ferreux soluble dans l'eau étant combinés dans un rapport molaire qui est dans la plage de 1:1000 à 1,2:1; et
• précipitation d'un précipité de sels à partir de la solution aqueuse de sels, ledit précipité contenant du fer cationique et un cation choisi parmi le sodium, le potassium, le calcium, l'ammonium et leurs combinaisons dans un rapport molaire de 1:1000 à 1,2:1.

10. Procédé selon la revendication 9, dans lequel le sel de fer au moins légèrement soluble dans l'eau est choisi parmi FeSO₄, Fe₂(SO₄)₃, FeCl₃, FeCl₂, le citrate de fer, le fumarate de fer, les hydrates de ces sels et les combinaisons de ces sels et hydrates.

11. Procédé selon la revendication 9 ou 10, dans lequel le sel non ferreux soluble dans l'eau est choisi parmi NaCl, KCl, CaCl₂, MgCl₂ et leurs combinaisons.

12. Procédé selon l'une quelconque des revendications 9 à 11, dans lequel le précipité de sels est précipité à partir de la solution aqueuse de sels par atomisation, séchage sur tambour, lyophilisation ou une combinaison de ces techniques de séchage.

13. Procédé selon la revendication 12, dans lequel le précipité de sels est séché jusqu'à une teneur en eau inférieure à 10 % en poids.
